# FASCICULE DE BREVET EUROPEEN

(11) **EP 1 752 794 B1**
(45) Date de publication et mention de la délivrance du brevet: **10.10.2012**
(21) Numéro de dépôt: 06117824.0
(22) Date de dépôt: 25.07.2006
(51) Int. Cl.: G01V 5/00, G01V 3/12

(54) **Detecteur d'objets non autorises dans une zone a acces protege**
Detektor von nicht erlaubten Objekten in einer Zone mit geschütztem Zugang
Detector of unauthorised objects in a protected access zone

(30) Priorité: 26.07.2005 FR 0507938
(43) Date de publication de la demande: 14.02.2007
(73) Titulaire: Manneschi, M. Alessandro, 52100 Arezzo (IT)
(72) Inventeur: Manneschi, M. Alessandro, 52100 Arezzo (IT)
(74) Mandataire: Texier, Christian

(56) Documents cités:
- US-A- 4 866 277
- US-A1- 2002 008 655
- US-A1- 2003 178 575
- US-A1- 2004 113 781
- US-A1- 2005 043 608
- US-A1- 2005 073 307
- US-A1- 2005 116 825

## Description

La présente invention concerne le domaine des détecteurs conçus pour la détection d'objets non autorisés dans une zone à accès protégé.

La présente invention s'applique en particulier à la détection de substances liquides ou solides.

Il apparaît aujourd'hui nécessaire de contrôler avec une grande fiabilité les tentatives d'introduction ou de sortie de substances liquides ou solides non autorisées dans ou hors d'une zone sensible.

Le problème ainsi posé couvre un très large éventail de situations qui englobe notamment et non limitativement la tentative d'introductions de substances liquides ou solides dangereuses dans une zone protégée, telle qu'un magasin, une école, une gare, un organisme public voir privé.

Il a déjà été proposé des moyens permettant l'examen de substances liquides ou solides : par exemple les moyens d'examen par rayons X. Cependant, ces moyens ne permettent pas de déterminer la nature de la substance liquide ou solide analysée. De tels moyens d'examen permettent en effet seulement le classement en deux catégories, matériaux organiques et non organiques. Ils ne permettent pas de distinguer entre eux deux matériaux organiques.

Plus précisément encore, il s'avère de nos jours que les individus qui tentent de sortir frauduleusement une substance liquide ou solide hors d'une zone protégée, par exemple en cas de vol dans une entreprise, ou qui tente d'introduire une substance liquide ou solide non autorisée, utilisent le plus souvent les chaussures et/ou chaussettes pour dissimuler les objets en question.

Ce phénomène semble dû essentiellement au fait que cette zone du corps humain est difficile à contrôler aisément visuellement ou par palpage manuel.

En pratique à l'heure actuelle, aucun dispositif jusqu'ici proposés ne permet de déterminer la nature de substances liquides ou solides.

Ainsi sur certains sites sensibles est-on contraint aujourd'hui d'inviter les personnes quittant le site ou accédant au site à enlever leurs chaussures puisque les dispositifs à rayons X ne peuvent pas être utilisés

Les documents US 2005/00073307, US 2004/0113781 et US 2005/011 6825 décrivent des dispositifs pour la détection d'objets métalliques dans une zone à accès protégé.

Toutefois ces dispositifs ne permettent pas la détection de substances liquides.

La présente invention a par conséquent pour objectif de proposer de nouveaux moyens permettant d'améliorer la fiabilité de détection de substance liquide ou solide dans une zone à accès protégé.

Ce but est atteint dans le cadre de la présente invention, grâce à un dispositif qui comprend en combinaison :
- une embase support conçue pour recevoir un pied unique, revêtu de sa chaussure, d'un individu à contrôler,
- des moyens émetteurs/récepteurs d'un champ électromagnétique à au moins plusieurs fréquences comprises dans une plage de fréquences déterminée pour la détection d'une substance liquide ou solide cible,
- des moyens repères de positionnement, sur l'embase support, aptes à imposer un positionnement précis du pied revêtu de sa chaussure par rapport aux moyens émetteurs/récepteurs,
- des moyens aptes à mesurer l'impédance complexe des moyens émetteurs/récepteurs influencée par la charge constituée par la chaussure et son contenu, représentative des caractéristiques diélectriques complexes de la chaussure et son contenu, et
- des moyens aptes à fournir une information liée à l'impédance complexe mesurée et en conséquence à la nature du contenu de ladite chaussure de l'individu à contrôler.

Dans le cadre de la présente invention, on entend par « au moins plusieurs fréquences » un nombre de fréquences supérieur à 1.

Ainsi, et comme on le précisera par la suite, l'invention se distingue de dispositifs antérieurs et/ou d'utilisations antérieures, par le fait que le dispositif est conçu pour opérer la détection sur un seul pied (chaussure) à la fois, et donc successivement sur les deux pieds (chaussures).

directement sur les chaussures encore aux pieds, car cela créerait un problème d'exposition de parties du corps humain aux radiations ionisantes.

Des aspects préférés mais non limitatifs du dispositif de la présente invention sont les suivants :
- l'embase support comporte un plateau en forme de marche qui comporte sur sa surface supérieure les moyens repères de positionnement,
- la hauteur de l'embase support est comprise entre 100 et 200mm, et très préférentiellement de l'ordre de 150mm,
- la largeur de l'embase support est comprise entre 450 et 700mm, et très préférentiellement de l'ordre de 575mm,
- la profondeur de l'embase support est comprise entre 500 et 900mm, et très préférentiellement de l'ordre de 670mm,
- les moyens repères de positionnement comprennent un dessin d'empreinte,
- le dessin d'empreinte comporte un cadre, de préférence rectangulaire,
- le cadre à une longueur comprise entre 300 et 500mm, de préférence de l'ordre de 400mm et une largeur comprise entre 110 et 250mm, de préférence de l'ordre de 180mm,
- les moyens repères de positionnement comprennent une butée mécanique,
- la butée mécanique est adaptée pour servir de butée pour le talon d'une chaussure.
- le dispositif comporte un moyen qui délivre des messages visuels ou sonores guidant l'utilisateur au cours des étapes successives de la détection,
- le dispositif comporte des moyens de tri aléatoire pour la désignation aléatoire d'individus dirigés vers un ou plusieurs test(s) complémentaire(s),
- le dispositif comporte des moyens de prélèvement de vapeurs ou traces de particules, par exemple de stupéfiants ou explosifs, et d'analyse de ces vapeurs ou traces,
- les moyens de prélèvement comprennent des buses d'aspiration sur l'embase support,
- le dispositif comprend deux panneaux verticaux en saillie sur l'embase support, les panneaux verticaux comprenant des buses d'aspiration pour le prélèvement de vapeurs ou traces de particules,
- la hauteur des panneaux verticaux est comprise entre 300 et 900mm,
- des moyens émetteurs/récepteurs entourent partiellement ou totalement le talon de la chaussure, ou entourent l'ensemble de la plante de la chaussure,
- les moyens aptes à fournir une information comprennent des moyens aptes à comparer l'impédance complexe mesurée avec des valeurs de référence prédéterminées pour la même plage de fréquences et à générer une alarme lorsque l'impédance complexe mesurée s'écarte des valeurs de référence,
- les moyens aptes à fournir une information liée à l'impédance complexe mesurée comprennent des moyens aptes à indiquer la nature ainsi détectée du contenu de la chaussure ou au moins la famille de ce contenu,
- les moyens émetteurs/récepteurs d'un champ électromagnétique sont adaptés pour balayer la plage de fréquences allant de quelques Hz à quelques GHz,
- les moyens aptes à mesurer l'impédance complexe sont adaptés pour mesurer celle-ci sur une pluralité de fréquences échantillonnées sur la plage couverte par les moyens émetteurs/récepteurs,
- les moyens aptes à comparer l'impédance complexe mesurée sont adaptés pour comparer celle-ci avec des valeurs de référence contenues dans une mémoire,
- le dispositif comprend un capteur adapté pour détecter la mise en place du pied, revêtu de sa chaussure, de l'individu à contrôler,
- le dispositif comprend des moyens à actionnement manuel adaptés pour initier la mise en service des moyens émetteurs/récepteurs d'un champ électromagnétique.
- les moyens émetteurs/récepteurs d'un champ électromagnétique sont de type inductif,
- les moyens émetteurs/récepteurs d'un champ électromagnétique sont de type capacitif,
- les moyens émetteurs/récepteurs d'un champ électromagnétique sont constitués par des lignes de transmission,
- les moyens émetteurs/récepteurs mettent en oeuvre simultanément un transducteur inductif et un transducteur capacitif, notamment pour la détection de parties métalliques dans la chaussure,
- le dispositif comporte en outre des moyens détecteurs de rayonnement ionisant ou radioactif, pour fournir une information liée à la présence ou à l'absence d'un produit émettant un rayonnement ionisant ou radioactif dans une zone de l'individu comprise entre la plante de la chaussure et le genou de l'individu à contrôler
- les moyens détecteurs de rayonnement ionisant ou radioactif sont disposés sous l'embase support sur la face opposée à celle comprenant les moyens repères de positionnement,
- le dessin comporte en outre une empreinte,
- les moyens détecteurs de rayonnement ionisant ou radioactif comprennent un tube dans lequel est confiné un gaz dont la composition est choisie pour générer une décharge ionisante lors de la détection d'un rayonnement actif, la décharge ionisante permettant la génération d'une impulsion électrique,
- le tube est disposé directement en dessous du dessin d'empreinte,
- le tube est disposé dans un plan de symétrie du dessin d'empreinte,
- le tube s'étend sensiblement sur toute la longueur du dessin d'empreinte,
- les moyens détecteurs de rayonnement ionisant ou radioactif comprennent des moyens de détection de l'impulsion électrique générée par le tube,
- les moyens de détection de l'impulsion électrique sont disposés sous l'embase, dans une région périphérique de l'empreinte,
- les moyens détecteurs de rayonnement ionisant ou radioactif sont fixés à l'embase.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective du bâti d'un dispositif conforme à la présente invention,
- la figure 2 représente une vue schématique sous forme de blocs fonctionnels d'éléments composant le dispositif illustré à la figure 1,
- la figure 3 représente la partie réelle et la partie imaginaire de l'impédance complexe mesurée dans le cas d'une charge composée d'eau, sur une large plage de fréquences,
- la figure 4 représente schématiquement le positionnement d'une chaussure par rapport à des moyens émetteurs/récepteurs réalisés selon une première variante,
- la figure 5 représente schématiquement le positionnement d'une chaussure par rapport à des moyens émetteurs/récepteurs réalisés selon une deuxième variante,
- la figure 6 est une vue de dessous d'un mode de réalisation du dispositif selon l'invention comprenant des moyens détecteurs de rayonnement ionisant ou radioactif,
- les figures 7 et 8 sont des vues en perspective d'une portion du mode de réalisation du dispositif illustré à la figure 6.

On va dans un premier temps décrire la structure générale d'un bâti d'appareil conforme à la présente invention illustrée sur les figures annexées.

Ce bâti 10 comprend de préférence :
- une embase support 100,
- deux panneaux latéraux symétriques 200, et
- un module d'informations 300.

L'embase support 100 a la géométrie d'un plateau rectangulaire en forme de marche. Sa surface supérieure 102 est plane.

Les dimensions de l'embase support 100 sont de préférence les suivantes :
- largeur comprise entre 450 et 700mm, typiquement de l'ordre de 575mm,
- profondeur comprise entre 500 et 900mm, typiquement de l'ordre de 670mm, et
- hauteur comprise entre 100 et 200mm, typiquement de l'ordre de 150mm.

Les deux panneaux latéraux verticaux 200 ont un contour globalement rectangulaire. Ils sont plans et parallèles entre eux. Les deux panneaux 200 font saillie vers le haut, au-dessus de l'embase 100, en position adjacente à ses côtés latéraux 103, 104. Les deux panneaux latéraux 200 forment ainsi en combinaison avec l'embase support sous-jacente 100, un canal susceptible d'accueillir le pied, équipé d'une chaussure, d'un utilisateur.

Les dimensions des panneaux 200 sont typiquement les suivantes :
- largeur correspondant à la profondeur de l'embase support 100,
- hauteur comprise entre 300 et 900mm, typiquement de l'ordre de 690mm.

La structure en forme de marche proposée pour l'embase support 100, typiquement d'une hauteur de l'ordre de 150mm, précédemment décrite, est conçue de manière à ce que la personne examinée n'ait pas à monter sur un socle, avec le risque de chute et de gêne psychologique résultant de l'exposition à d'autres personnes aux alentours. En effet, l'utilisation d'une embase support 100 conçue pour accueillir un seul pied requiert seulement un acte du type acte initial de montée sur une échelle en mettant le pied dans une zone bien indiquée.

Par rapport à l'art antérieur, une telle structure à marche offre les avantages suivants :
- la préparation à monter une marche est un acte quotidien normal qui ne demande pas d'instruction particulière pour sa correcte exécution,
- cette même opération ne demande pas d'effort physique, même de la part d'une personne âgée ou d'une femme enceinte et en particulier, ne requiert pas un effort physique important, comme celui exigé par exemple pour monter une estrade,
- la structure en forme de marche permet d'éloigner du sol les antennes de génération et de réception de champs électromagnétiques constituées par les bobinages intégrés dans les panneaux latéraux 200, en réduisant ainsi les risques d'accouplement avec d'éventuelles structures métalliques intégrées dans ce sol,
- une telle structure permet de prévoir en mode naturel l'examen d'une seule chaussure à la fois, et
- permet une structure compacte par rapport à une estrade sur laquelle doit monter une personne complète, selon certains dispositifs connus de l'art antérieur.

Le module d'informations 300 comporte de préférence un pupitre de contrôle équipé d'un clavier de saisie et/ou de programmation, d'un afficheur et de moyens de signalisation (lumineux et/ou sonore) de présence réseau et d'alarme. A cet égard, l'invention n'est bien entendu pas limitée aux modes de réalisation particuliers représentés sur les figures annexées.

Le module d'informations 300 comprend en outre de préférence des moyens aptes à fournir des messages visuels et/ou sonores guidant l'utilisateur au cours de l'ensemble du processus de détection. De préférence, ce module 300 fournit successivement des messages ayant pour fonctions :
- de signaler que le dispositif est prêt pour la détection, par exemple le message "READY",
- d'inviter l'individu à placer son pied, sa chaussure, sur l'empreinte définie à cet effet, laquelle sera décrite plus en détail par la suite, par exemple sous forme du message "PLACE SHOE",
- de signaler à l'individu que la détection a été réalisée avec succès sans détection d'alarme et l'inviter, soit à réitérer avec la seconde chaussure, soit à se retirer, par exemple sous forme des messages "PASSED" ou "REMOVE".

Bien évidemment, les moyens 300 comprennent de préférence également les moyens de traitement aptes à exploiter les signaux électriques issus de moyens détecteurs qui seront décrits dans la suite.

On va maintenant décrire la géométrie préférentielle des moyens formant repères de positionnement conformes à la présente invention prévus sur la surface supérieure 102 de l'embase support 100.

Ces moyens repères de positionnement portent la référence générale 400.

Ils comprennent de préférence, un dessin 410 combiné avec une butée 450.

Le dessin 410 comprend lui-même de préférence, trois éléments en combinaison : une ligne médiane 420, un cadre 430 et une empreinte 440.

La ligne médiane 420 s'étend parallèlement aux panneaux latéraux 200 à mi-distance de ceux-ci. Elle est centrée sur le cadre 430 et de longueur préférentiellement inférieure ou égale à celui-ci.

Le cadre 430 est de préférence un cadre rectangulaire comprenant deux grands côtés parallèles entre eux et parallèles à la ligne médiane 420, ainsi que parallèles aux panneaux latéraux 200 et deux petits côtés parallèles entre eux, perpendiculaires aux grands côtés, et reliant ceux-ci.

Les dimensions du cadre 430 sont de préférence les suivantes :
- largeur (soit longueur des petits côtés 436, 438) comprise entre 110 et 250mm, typiquement de l'ordre de 180mm,
- longueur (soit longueur des grands côtés 432, 434) de préférence comprise entre 300 et 500mm, typiquement de l'ordre de 400mm.

Les dimensions générales de l'empreinte 440 sont de préférence les suivantes :
- longueur ou encombrement maximal parallèlement à la ligne médiane 420 comprise entre 250 et 350mm, typiquement de l'ordre de 300mm, et
- encombrement en largeur, soit perpendiculairement à la ligne médiane 420 compris entre 100 et 180mm, typiquement de l'ordre de 136mm.

La butée 450 peut être formée de tout mode de réalisation approprié. Il s'agit de préférence d'une saillie légèrement incurvée prévue au niveau de la zone commune aux petits côtés du cadre et à la partie arrière de l'empreinte 440, pour servir d'appui au talon de la chaussure.

L'empreinte 400 de positionnement peut être dessinée ou gravée sur le plan supérieur 102 de la marche 100. La butée 450 forme un sabot de référence, en relief, qui permet d'imposer la position du talon de la chaussure et permet ainsi un positionnement répétitif précis de la chaussure par rapport aux moyens émetteurs/récepteurs qui seront décrits plus en détail dans la suite. La Demanderesse a en effet déterminé qu'un tel positionnement répétitif précis est indispensable pour une analyse fiable.

On va maintenant décrire plus en détail les moyens émetteurs/récepteurs du dispositif de la présente invention.

Celle-ci repose essentiellement sur l'approche suivante.

Les matériaux diélectriques présentent quatre polarisations de base : électronique, ionique, de dipôle et migrationnelle.

Chaque type de polarisation est caractérisé par un temps de mise en place, appelé temps de montée. Si le champ électromagnétique d'excitation a une pulsation supérieure à l'inverse du temps de montée, la polarisation ne peut pas se réaliser. Par conséquent, la polarisation est présente uniquement aux fréquences inférieures à celles de coupure et est absente aux fréquences supérieures. Dans la zone de transition, on assiste à un phénomène de perte d'énergie dans le diélectrique dû à la rotation des molécules déphasées vis à vis du champ d'excitation.

Les temps de montée pour la polarisation électronique sont de 10⁻¹⁴ à 10⁻¹⁵ s, c'est-à-dire dans le domaine optique. Une telle gamme de fréquences est difficilement exploitable à l'échelle industrielle car le pied revêtu de sa chaussure d'un individu à contrôler peut être fréquemment partiellement ou complètement opaque.

La polarisation ionique a des temps de montée compris entre 10⁻¹³ et 10⁻¹⁴ s, très proche des temps de relaxation électronique. Elle est donc également difficilement exploitable.

La polarisation de dipôle est caractéristique des diélectriques polaires (comme par exemple l'eau).

La polarisation de dipôle, au contraire des polarisations électroniques et ioniques, qui sont sans inertie, persiste pour un certain temps après l'extinction d'une excitation. La polarisation de dipôle diminue avec une loi exponentielle et une constante de temps, appelée temps de relaxation, comprise entre 10⁻⁶ et 10⁻¹¹ s, c'est-à-dire dans le domaine des fréquences radio. Les ondes électromagnétiques ayant ces fréquences peuvent traverser le verre, la matière plastique et d'autres matériaux diélectriques. La Demanderesse a ainsi déterminé que les ondes électromagnétiques peuvent être utilisées pour l'examen du pied, revêtu de sa chaussure, d'un individu à contrôler.

La polarisation migrationnelle est présente dans certains diélectriques, en particulier dans les matériaux hétérogènes, qui contiennent des impuretés. Dans ce cas, les charges se déplacent très lentement et le temps de montée peut être de plusieurs secondes, minutes, voire parfois heures. Ce type de polarisation par conséquent n'est mesurable qu'à très basse fréquence.

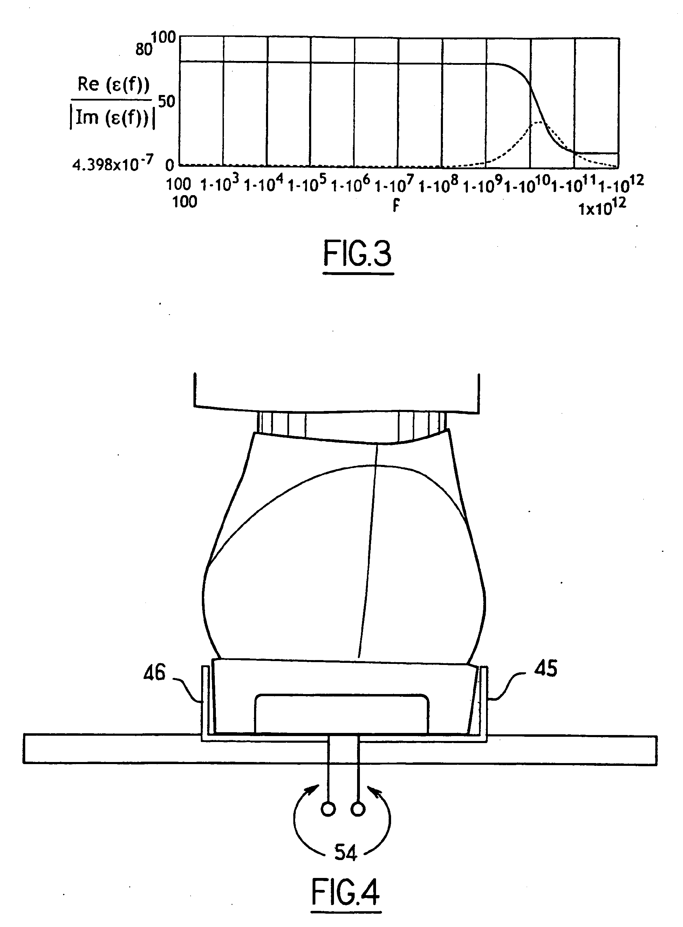

L'eau qui est un liquide polaire, et par conséquent les liquides à base d'eau, présentent un temps de relaxation de l'ordre de 10⁻¹¹ s à température ambiante, correspondant à une fréquence d'environ 16 GHz. La mesure de la constante diélectrique complexe à fréquence plus basse que celle de relaxation montre une partie réelle élevée et des pertes limitées (eau distillée) comme l'illustre la figure 3 annexée.

Les hydrocarbures saturés CnH(2n+2) sont des molécules non polaires ou avec un moment de dipôle électrique très bas, par conséquent, ils ne présentent pas un phénomène de polarisation de dipôle et la valeur de la partie réelle de la constante diélectrique est basse (constante diélectrique relative de l'ordre de 2). Les pertes dans les hydrocarbures sont négligeables jusqu'à des fréquences très élevées. Si une molécule d'hydrocarbure perd sa symétrie comme, par exemple, dans le cas de l'alcool éthylique ou méthylique, on assiste à la parution d'un moment de dipôle électrique et, par conséquent, à une constante supérieure à celle obtenue dans le cas des hydrocarbures, et à un phénomène de résonance à la fréquence de relaxation dipolaire.

Les phénomènes physiques décrits ci-dessus sont connus depuis la fin des années 30 (voire par exemple Peter Debye Nobel Lecture, 1936).

Cependant, ils n'ont pas jusqu'ici été mis en oeuvre pour l'analyse efficace du pied, revêtu de sa chaussure, d'un individu à contrôler.

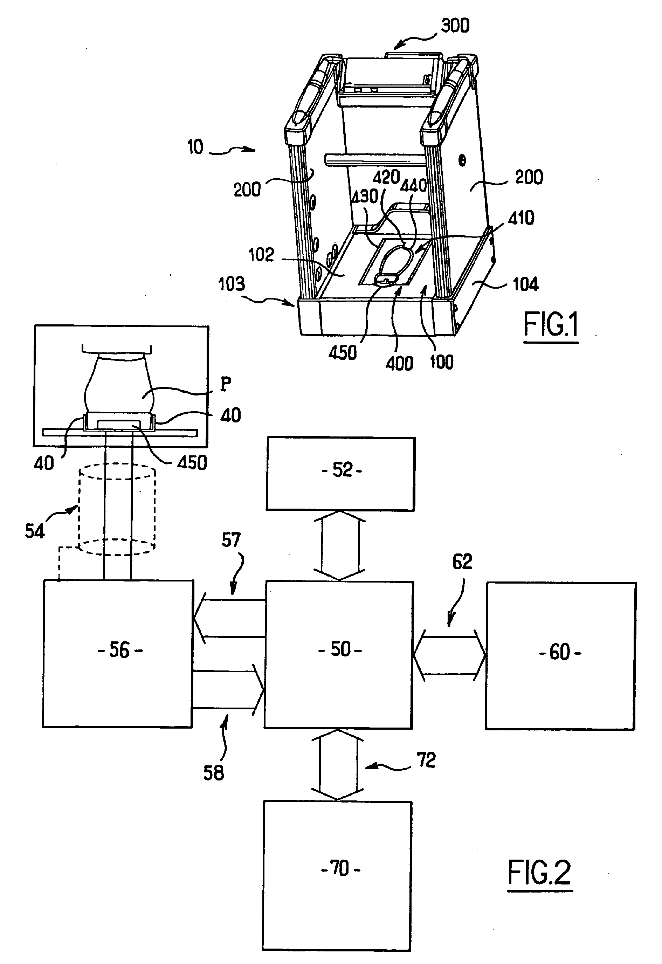

En référence à la figure 2, on a schématisé sous la référence P un pied, revêtu de sa chaussure, d'un individu à contrôler, et sur lequel on retrouve la butée 450. De préférence le capteur ou les capteurs électromagnétiques destiné(s) à mesurer les caractéristiques diélectriques complexes de la chaussure et de son contenu sont placés au niveau du talon de la chaussure, de part et d'autre de l'axe longitudinal du pied.

Plus précisément, une partie de ces moyens 40 émetteurs/récepteurs d'un champ électromagnétique s'étendent verticalement vers l'extérieur de la base 100 dans des plans parallèles aux panneaux latéraux 200, au niveau de la partie arrière de l'empreinte 440.

De préférence, la partie des moyens 40 émetteurs/récepteurs qui s'étend verticalement vers l'extérieur présente une hauteur inférieure à la hauteur d'une semelle standard. Ceci permet d'éviter que les moyens émetteurs/récepteurs 40 ne soient influencés par la charge constituée par le sang du pied de l'individu à contrôler (le sang étant un liquide polaire).

Ces moyens émetteurs/récepteurs de champ électromagnétique, sont formés de préférence d'un ou plusieurs transducteur(s) (antennes) 40 relié(s), par l'intermédiaire d'un réseau de connexion 54, d'un réseau électromagnétique de mesure 56 et de bus 57, 58, à un générateur 50, conçus pour émettre une onde électromagnétique. Typiquement le générateur 50 est adapté pour couvrir la plage de fréquences allant de quelques Hz, par exemple 5Hz à quelques GHz, par exemple 20 ou 50 GHz. Le générateur 50 est mis en oeuvre, soit manuellement par un opérateur lorsqu'un individu à contrôler place son pied, revêtu de sa chaussure sur l'empreinte 440, soit automatiquement sous l'effet d'un capteur 52 conçu pour détecter la présence d'un pied, revêtu de sa chaussure, de l'individu à contrôler.

Les moyens 40 émetteurs/récepteurs de champ électromagnétique peuvent faire l'objet de nombreux modes de réalisation.

Dans un mode de réalisation, ces moyens 40 sont formés d'un simple bobinage formant émetteur et récepteur, relié par un réseau 54 à deux fils aux moyens 56.

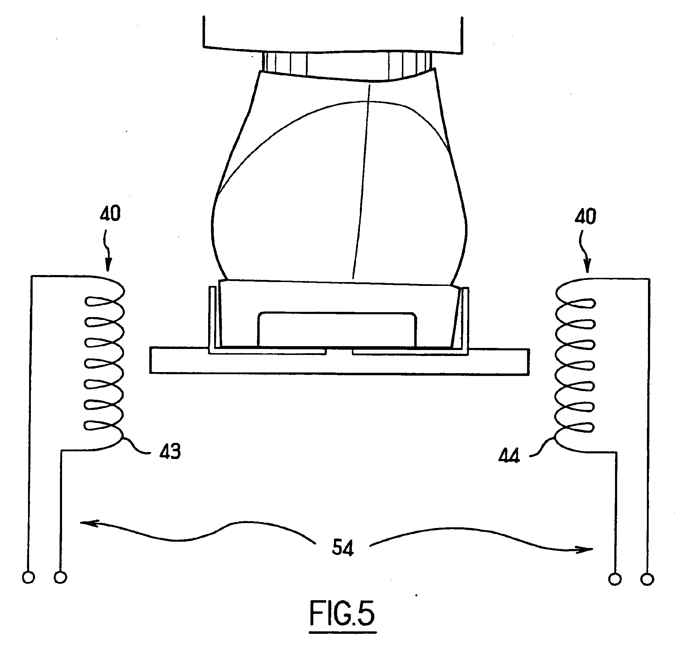

Dans un autre mode de réalisation illustré à la figure 5, les moyens 40 sont formés de deux bobinages 43, 44 formant respectivement, et le cas échéant alternativement, émetteur et récepteur, reliés par un réseau 54 à quatre fils aux moyens 56.

Dans un autre mode de réalisation illustré à la figure 4, les moyens 40 sont formés de deux armatures 45, 46 d'une capacité situées de part et d'autre du talon de l'empreinte et reliés par un réseau 54 à deux fils aux moyens 56.

Dans une autre variante de réalisation de la présente invention, les moyens 40 sont formés de lignes de transmission. Typiquement, ces lignes de transmission opèrent dans le domaine des micro-ondes. Elles peuvent être formées de lignes bi-filaires ou de guides d'ondes à fentes.

Par ailleurs, dans le cadre de la présente invention, on peut utiliser des capteurs mettant en oeuvre simultanément un transducteur inductif et un transducteur capacitif. Cette disposition permet de déceler que la croissance de la partie réelle de la constante diélectrique complexe est due à une armature métallique interne à la chaussure et non à une ou des substances liquides ou solides ayant des propriétés particulières. Cette disposition permet de déceler la présence d'écrans métalliques susceptibles de former blindage perturbant la mesure. Le capteur inductif alimenté par une source de courant alternatif produira, dans ce cas, des courants de Foucault dans la partie métallique. Ces courants seront mesurés par le dispositif de traitement. Et la comparaison des signaux provenant du transducteur de champ électrique et du transducteur de champ magnétique permet une détection satisfaisante.

Bien entendu, le nombre de moyens composant les émetteurs et/ou récepteurs n'est aucunement limité et peut être supérieur à ceux illustrés sur les figures annexées.

L'homme de l'art comprendra à la lecture de la description détaillée qui précède, que la présente invention propose ainsi un capteur électromagnétique à balayage de fréquences élevées qui permet de mesurer les caractéristiques diélectriques de la chaussure et son contenu.

Les moyens 50 sont conçus par ailleurs pour mesurer l'impédance complexe des moyens émetteurs/récepteurs 40 influencés par la charge constituée par la chaussure et son contenu, représentative des caractéristiques diélectriques complexes de la plante et du talon de la chaussure et son contenu. Plus précisément, les moyens 50 sont conçus pour mesurer cette impédance complexe à plusieurs fréquences échantillonnées sur la plage d'excitation précitée de quelques Hz à plusieurs GHz. Typiquement, les moyens 50 opèrent ainsi sur un nombre de fréquences compris entre 10 et 50, avantageusement sur une trentaine de fréquences.

Par ailleurs, les moyens 50 sont adaptés pour fournir une information liée à l'impédance complexe mesurée et à la nature du contenu de la chaussure détecté en conséquence.

De préférence, ces moyens 50 sont adaptés pour comparer l'impédance complexe ainsi mesurée avec des valeurs de référence prédéterminées pour la même plage de fréquences et à générer une alarme lorsque l'impédance complexe mesurée s'écarte des valeurs de référence.

On a représenté sur la figure 2, une mémoire 60 couplée aux moyens d'analyse 50 par un bus de communication 62, et dans laquelle peuvent être mémorisées les valeurs de référence prédéterminées sur la plage de fréquence de travail. On a par ailleurs représenté sur la même figure 2 sous la référence 70, des moyens d'alarme, présents de préférence sur le pupitre de contrôle du module d'informations 300, reliés aux moyens 50 par un bus de communication 72 et adaptés pour générer une alarme sonore et/ou visuelle, lorsque l'impédance complexe mesurée s'écarte des valeurs de référence.

En variante, les valeurs de référence peuvent être calculées par les moyens 50 et non pas contenues dans une mémoire 60.

Par ailleurs, selon une autre variante, les moyens 70 peuvent être adaptés pour indiquer directement la nature du contenu de la chaussure ou au moins la famille de ce contenu à la place de ou en complément des moyens d'alarme précités.

Une fois que le pied revêtu de sa chaussure à contrôler est positionné, le générateur 50 est activé, soit manuellement, soit automatiquement, et l'impédance complexe du réseau formé par le circuit d'émission/réception 40 influencée par la chaussure et son contenu est mesurée.

L'impédance mesurée qui dépend du circuit de transmission/réception et de la charge est composée par une partie réelle, liée aux pertes (conductibilité) dans le contenu de la chaussure analysée et d'une partie imaginaire, liée aux caractéristiques diélectriques.

La mesure de l'impédance est effectuée à différentes fréquences dans la plage déterminée.

Bien entendu la présente invention n'est pas limitée aux modes de réalisation particuliers qui viennent d'être décrits mais s'étend à toute variante conforme à son esprit.

On notera par ailleurs que, dans le cadre de la présente invention, les capteurs 40 sont de préférence adaptés pour couvrir au moins une partie substantielle de la chaussure, voire la totalité de celle-ci. Ceci garantit un haut niveau de sécurité dans l'analyse.

Lorsqu'il est prévu un seul transducteur, celui-ci est simultanément ou successivement émetteur et récepteur.

Lorsqu'il est prévu plusieurs transducteurs, toutes les combinaisons sont possibles, c'est-à-dire que ces transducteurs peuvent être simultanément ou successivement émetteur et/ou récepteur.

Bien entendu la présente invention n'est pas limitée aux modes de réalisation particuliers qui viennent d'être décrits mais s'étend à toute variante conforme à son esprit.

Elle n'est pas non plus limitée à une application particulière et peut s'appliquer à toute zone sensible telle que école, gare, entreprise privée ou publique, stade, salle de spectacle, enceinte de manifestation, etc...

Selon une variante de réalisation, la butée 450 pour le talon peut être omise. Dans ce cas cependant, il est alors préférable de prévoir plusieurs bobinages décalés longitudinalement, c'est-à-dire parallèlement à la ligne médiane 420, pour optimiser la détection et de retenir le signal le plus faible issu des moyens émetteurs/récepteurs afin de s'affranchir au mieux des perturbations extérieures.

Comme on l'a évoqué précédemment, de préférence, le dispositif conforme à la présente invention comprend des moyens de tri aléatoire pour la désignation aléatoire d'individus dirigés vers un ou plusieurs tests complémentaires. Le ou les tests complémentaires peuvent consister par exemple en un palpage manuel ou en un dispositif d'analyse automatique, par exemples les prélèvements et l'analyse de vapeur ou de trace de particules, par exemple de stupéfiants ou explosif.

Comme on l'a indiqué précédemment, le dispositif conforme à la présente invention peut être complété par des moyens d'aspiration de vapeur et/ou de traces de matière sensible, par exemple stupéfiant voire explosif provenant éventuellement des chaussures. De tels moyens d'aspiration sont de préférence intégrés dans les panneaux latéraux 200 et dans l'embase support 100 formant marche. Les moyens d'aspiration peuvent comporter une pluralité de buses d'aspiration situées sur les panneaux latéraux 200.

Ces buses d'aspiration peuvent être suivies de filtres et de moyens de contrôle. Ces derniers peuvent eux-mêmes être reliés à l'entrée d'une pompe actionnée par un moteur. La sortie de la pompe peut être reliée à un détecteur approprié, par exemple du type spectromètre de masse. Le détecteur et le moteur peuvent être reliés et par une unité de traitement.

Selon une variante de réalisation, les buses d'aspiration peuvent être remplacées directement par des capteurs monolithiques spécialisés, connectés électriquement à l'unité de traitement.

Par rapport à l'art antérieur, la présente invention offre en particulier les avantages suivants :
- une sécurité de contrôle élevée et homogène,
- une grande fluidité de passage sans exiger de personnel de contrôle spécialisé,
- l'élimination des coûts de personnel spécialisé dédié dans certaines applications connues à un contrôle manuel des chaussures,
- l'argumentation du confort pour le public par l'élimination de la gêne causée par l'enlèvement / la remise des chaussures et par la perte de temps associée à une telle opération,
- l'élimination de la nécessité d'appareils à rayons X requis dans certaines applications connues pour un examen,
- le dispositif est léger et peu volumineux donc aisément déplaçable et adaptable sur tout site,
- l'analyse des chaussures n'est pas effectuée en mode différentiel, comme cela est le cas dans certains appareils connus, mais de manière absolue chaussure par chaussure. Ainsi chaque chaussure est évaluée séparément et la détection de la substance liquide ou solide cible la plus critique, c'est-à-dire celle de signal minimal, effectuée indépendamment de la comparaison avec l'autre. La Demanderesse a déterminé que cette disposition permet de garantir la sécurité d'interception des cibles de signal minimal dans toutes les conditions de transport.
- au niveau de l'ergonomie, l'appareil est simple et confortable. Il ne contraint pas la personne examinée à avoir des comportements étranges ou à prendre des positions embarrassantes. Le temps d'analyse peut être réduit au minimum.
- l'utilisation d'une embase support en forme de marche (associée à des moyens repères de positionnement) garantit la détection sur une chaussure unique, la seconde chaussure qui repose sur le sol étant maintenue en dehors du champ de détection.

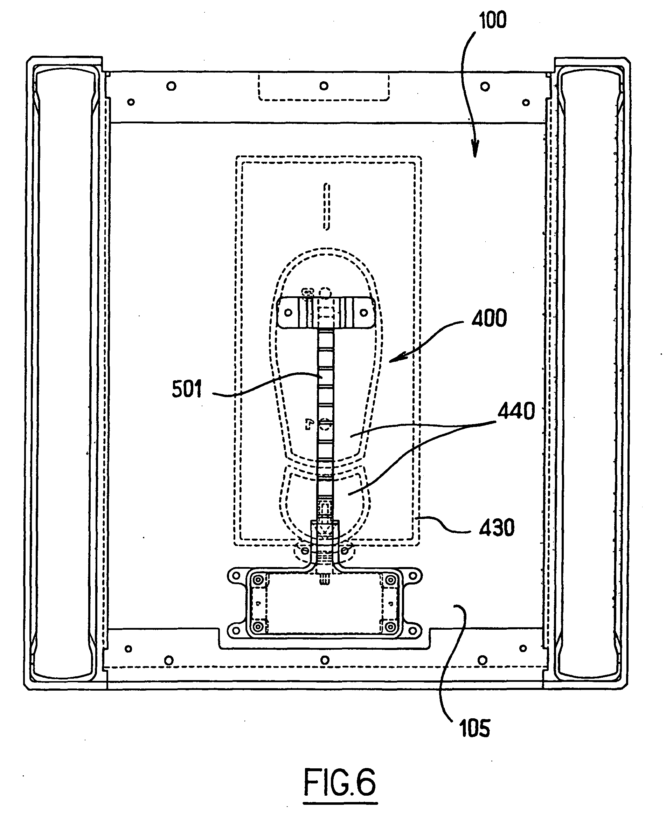

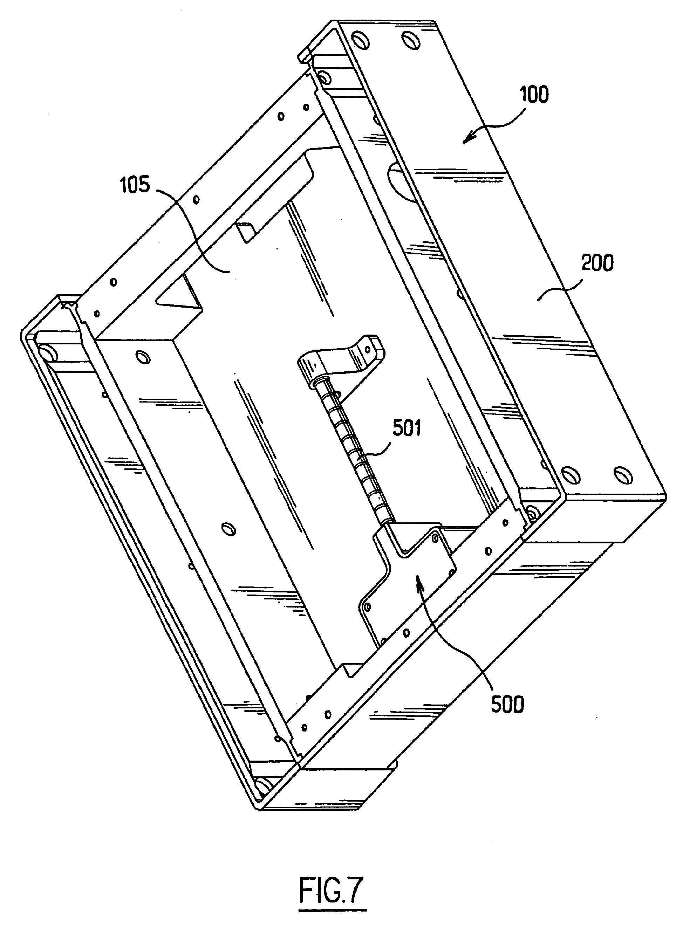

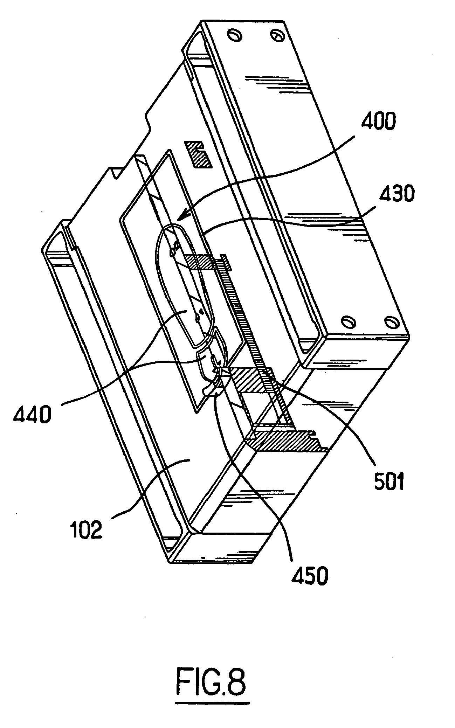

Dans un mode de réalisation illustré aux figures 6 à 8, le dispositif décrit ci-dessus peut comprendre des moyens détecteurs de rayonnement ionisant ou radioactif du dispositif.

Comme illustré aux figures 6 à 8, les moyens détecteurs de rayonnement ionisant ou radioactif 500 peuvent être disposés sous l'embase support 100.

Ceci permet d'augmenter la compacité du dispositif et de protéger les moyens détecteurs de rayonnement ionisant ou radioactif 500 contre les chocs.

Les moyens détecteurs de rayonnement ionisant ou radioactif peuvent faire l'objet de nombreux modes de réalisation. Ils peuvent être formés de toutes structures connues de l'homme de l'art, en particulier toutes structures aptes à convertir un rayon ionisant détecté, en un signal électrique exploitable.

Il peut s'agir par exemple et non limitativement d'un détecteur de type Geiger.

Dans le mode de réalisation illustré aux figures 6 à 8, les moyens détecteurs de rayonnement ionisant ou radioactif 500 comprennent un tube 501 dans lequel est confiné un gaz dont la composition est choisie pour générer une décharge ionisante lors de la détection d'un rayonnement actif, et de là une impulsion électrique.

Avantageusement, les moyens détecteurs de rayonnement ionisant ou radioactif 500 peuvent également être constitués d'un détecteur à scintillateur apte à convertir l'énergie détectée en scintillations lumineuses converties ensuite en signal électrique par un réseau de photomultiplicateurs. De nombreux scintillateurs ont été proposés à cet effet, par exemple à base de iodure de sodium, de iodure de césium ou encore de germanate de bismuth.

Les moyens détecteurs de rayonnement ionisant ou radioactif 500 sont placés en tous lieux appropriés et de préférence fixé sous l'embase 100, sur la face opposée 105 à celle comprenant les moyens repères de positionnement 400. Ceci permet d'augmenter les chances de détection d'un éventuel produit radioactif contenu dans la chaussure ou la chaussette de l'individu contrôlé, du fait de la proximité entre la chaussure contrôlée et les moyens détecteurs de rayonnement ionisant ou radioactif 500.

Avantageusement, le tube 501 est disposé directement en dessous de l'empreinte 440, dans un plan de symétrie de l'empreinte 440.

Par ailleurs, dans le mode de réalisation illustré aux figures 6 à 8, le tube 501 s'étend sensiblement sur toute la longueur de l'empreinte 440. Ceci permet d'assurer une détection optimale dans toute la région couverte par la chaussure.

Les moyens détecteurs de rayonnement ionisant ou radioactif 500 comprennent des moyens de détection 502 de l'impulsion électrique générée par le tube 501.

Avantageusement, ces moyens de détection 502 de l'impulsion électrique sont également disposés sous l'embase 100, dans une région périphérique du dessin 410, et sont fixés à l'embase 100.

Les moyens détecteurs de rayonnement ionisant ou radioactif 500 permettent de fournir une information liée à la présence ou à l'absence d'un produit émettant un rayonnement ionisant ou radioactif dans une zone de l'individu comprise entre la plante de la chaussure et le genou de l'individu à contrôler.

Les moyens détecteurs de rayonnement ionisant ou radioactif 500 sont adaptés pour travailler en temps masqué, en parallèle des moyens de mesure d'impédance complexe décrit ci-après.

## Revendications

1. Dispositif détecteur de substances liquides ou solides non autorisées dans une zone à accès protégé, **caractérisé par le fait qu'**il comprend en combinaison :
- une embase support (100) conçue pour recevoir un pied unique, revêtu de sa chaussure, d'un individu à contrôler,
- des moyens (40) émetteurs/récepteurs d'un champ électromagnétique à au moins plusieurs fréquences comprises dans une plage de fréquences déterminée,
- des moyens repères (400) de positionnement, sur l'embase support (100), aptes à imposer un positionnement précis du pied revêtu de sa chaussure par rapport aux moyens (40) émetteurs/récepteurs,
- des moyens (50) aptes à mesurer l'impédance complexe des moyens (40) émetteurs/récepteurs influencée par la charge constituée par la chaussure et son contenu, représentative des caractéristiques diélectriques complexes de la chaussure et de son contenu, et
- des moyens (50) aptes à fournir une information liée à l'impédance complexe mesurée et en conséquence à la nature du contenu de ladite chaussure de l'individu à contrôler.

2. Dispositif selon la revendication 1, **caractérisé par le fait que** l'embase support (100) comporte un plateau en forme de marche qui comporte sur sa surface supérieure (102) les moyens repères de positionnement (400).

3. Dispositif selon l'une des revendications 1 ou 2, **caractérisé par le fait que** la hauteur de l'embase support (100) est comprise entre 100 et 200mm, et très préférentiellement de l'ordre de 150mm.

4. Dispositif selon l'une des revendications 1 à 3, **caractérisé par le fait que** la largeur de l'embase support (100) est comprise entre 450 et 700mm, et très préférentiellement de l'ordre de 575mm.

5. Dispositif selon l'une des revendications 1 à 4, **caractérisé par le fait que** la profondeur de l'embase support (100) est comprise entre 500 et 900mm, et très préférentiellement de l'ordre de 670mm.

6. Dispositif selon l'une des revendications 1 à 5, **caractérisé par le fait que** les moyens repères de positionnement (400) comprennent un dessin d'empreinte (410).

7. Dispositif selon la revendication 6, **caractérisé par le fait que** le dessin d'empreinte (410) comporte un cadre, de préférence rectangulaire.

8. Dispositif selon la revendication 7, **caractérisé par le fait que** le cadre à une longueur comprise entre 300 et 500mm, de préférence de l'ordre de 400mm et une largeur comprise entre 110 et 250mm, de préférence de l'ordre de 180mm.

9. Dispositif selon l'une des revendications 6 à 8, **caractérisé par le fait que** les moyens repères de positionnement (400) comprennent une butée mécanique (450).

10. Dispositif selon la revendication 9, **caractérisé par le fait que** la butée mécanique (450) est adaptée pour servir de butée pour le talon d'une chaussure.

11. Dispositif selon l'une des revendications 1 à 10, **caractérisé par le fait qu'**il comporte un moyen (300) qui délivre des messages visuels ou sonores guidant l'utilisateur au cours des étapes successives de la détection.

12. Dispositif selon l'une des revendications 1 à 11, **caractérisé par le fait qu'**il comporte des moyens (740) de tri aléatoire pour la désignation aléatoire d'individus dirigés vers un ou plusieurs test(s) complémentaire(s).

13. Dispositif selon l'une des revendications 1 à 12, **caractérisé par le fait qu'**il comporte des moyens (800) de prélèvement de vapeurs ou traces de particules, par exemple de stupéfiants ou explosifs, et d'analyse de ces vapeurs ou traces.

14. Dispositif selon la revendication 13, **caractérisé par le fait que** les moyens de prélèvement comprennent des buses d'aspiration (800) sur l'embase support (100).

15. Dispositif selon l'une des revendications 1 à 14, **caractérisé par le fait qu'**il comprend deux panneaux verticaux (200) en saillie sur l'embase support (100) les panneaux verticaux (200) comprenant des buses d'aspiration (800) pour le prélèvement de vapeurs ou traces de particules.

16. Dispositif selon la revendication 15, **caractérisé par le fait que** la hauteur des panneaux verticaux (200) est comprise entre 300 et 900mm.

17. Dispositif selon l'une des revendications précédentes, **caractérisé par le fait que** des moyens émetteurs/récepteurs (40) entourent partiellement ou totalement le talon de la chaussure, ou entourent l'ensemble de la plante de la chaussure.

18. Dispositif selon l'une des revendications 1 à 17, **caractérisé par le fait que** les moyens (50) aptes à fournir une information comprennent des moyens aptes à comparer l'impédance complexe mesurée avec des valeurs de référence prédéterminées pour la même plage de fréquences et à générer une alarme lorsque l'impédance complexe mesurée s'écarte des valeurs de référence.

19. Dispositif selon l'une des revendications 1 à 18, **caractérisé par le fait que** les moyens (50) aptes à fournir une information liée à l'impédance complexe mesurée comprennent des moyens (70) aptes à indiquer la nature ainsi détectée du contenu de la chaussure ou au moins la famille de ce contenu.

20. Dispositif selon l'une des revendications 1 à 19, **caractérisé par le fait que** les moyens (40) émetteurs/récepteurs d'un champ électromagnétique sont adaptés pour balayer la plage de fréquences allant de quelques Hz à quelques GHz.

21. Dispositif selon l'une des revendications 1 à 20, **caractérisé par le fait que** les moyens (50) aptes à mesurer l'impédance complexe sont adaptés pour mesurer celle-ci sur une pluralité de fréquences échantillonnées sur la plage couverte par les moyens émetteurs/récepteurs.

22. Dispositif selon l'une des revendications 1 à 21 prise en combinaison avec la revendication 18, **caractérisé par le fait que** les moyens aptes à comparer l'impédance complexe mesurée sont adaptés pour comparer celle-ci avec des valeurs de référence contenues dans une mémoire (60).

23. Dispositif selon l'une des revendications 1 à 22, **caractérisé par le fait qu'**il comprend un capteur (52) adapté pour détecter la mise en place du pied, revêtu de sa chaussure, de l'individu à contrôler.

24. Dispositif selon l'une des revendications 1 à 22, **caractérisé par le fait qu'**il comprend des moyens à actionnement manuel adaptés pour initier la mise en service des moyens (40) émetteurs/récepteurs d'un champ électromagnétique.

25. Dispositif selon l'une des revendications 1 à 24, **caractérisé par le fait que** les moyens (40) émetteurs/récepteurs d'un champ électromagnétique sont de type inductif.

26. Dispositif selon l'une des revendications 1 à 24, **caractérisé par le fait que** les moyens (40) émetteurs/récepteurs d'un champ électromagnétique sont de type capacitif.

27. Dispositif selon l'une des revendications 1 à 24, **caractérisé par le fait que** les moyens (40) émetteurs/récepteurs d'un champ électromagnétique sont constitués par des lignes de transmission.

28. Dispositif selon l'une des revendications 1 à 24, **caractérisé par le fait que** les moyens (40) émetteurs/récepteurs mettent en oeuvre simultanément un transducteur inductif (42) et un transducteur capacitif (45, 46), notamment pour la détection de parties métalliques dans la chaussure.

29. Dispositif selon la revendication 6, **caractérisé en ce que** le dessin comprend une empreinte.

30. Dispositif selon l'une des revendications 1 à 29, **caractérisé en ce qu'**il comprend en outre des moyens détecteurs de rayonnement ionisant ou radioactif (500), pour fournir une information liée à la présence ou à l'absence d'un produit émettant un rayonnement ionisant ou radioactif dans une zone de l'individu comprise entre la plante de la chaussure et le genou de l'individu à contrôler.

31. Dispositif selon la revendication 30, **caractérisé en ce que** les moyens détecteurs de rayonnement ionisant ou radioactif (500) sont disposés sous l'embase support (100) sur la face opposée (105) à celle comprenant les moyens repères de positionnement (400).

32. Dispositif selon l'une des revendications 30 ou 31, **caractérisé en ce que** les moyens détecteurs de rayonnement ionisant ou radioactif (500) comprennent un tube (501) dans lequel est confiné un gaz dont la composition est choisie pour générer une décharge ionisante lors de la détection d'un rayonnement actif, la décharge ionisante permettant la génération d'une impulsion électrique.

33. Dispositif selon la revendication 29 en combinaison avec l'une des revendications 30 à 32, **caractérisé en ce que** le tube (501) est disposé directement en dessous de l'empreinte (400).

34. Dispositif selon la revendication 29 en combinaison avec l'une des revendications 30 à 33, **caractérisé en ce que** le tube (501) est disposé dans un plan de symétrie de l'empreinte (440).

35. Dispositif selon la revendication 29 en combinaison avec l'une des revendications 30 à 34, **caractérisé en ce que** le tube (501) s'étend sensiblement sur toute la longueur de l'empreinte (440),

36. Dispositif selon l'une des revendications 30 à 35, **caractérisé en ce que** les moyens détecteurs de rayonnement ionisant ou radioactif (500) comprennent des moyens de détection (502) de l'impulsion électrique générée par le tube (501).

37. Dispositif selon les revendications 29 et 36 en combinaison, **caractérisé en ce que** les moyens de détection (502) de l'impulsion électrique sont disposés sous l'embase (100), dans une région périphérique de l'empreinte.

38. Dispositif selon l'une des revendications 30 à 37, **caractérisé en ce que** les moyens détecteurs de rayonnement ionisant ou radioactif (500) sont fixés à l'embase.

## Claims

1. A device for the detection of unauthorised liquid or solid substances in a zone with protected access, **characterised in that** it includes the following in combination:
- a support base (100) designed to receive a single foot, wearing its shoe, of an individual to be checked,
- emission/reception means (40) of an electromagnetic field at least at several frequencies in a specified range of frequencies,
- position marking means (400), on the support base (100), designed to impose a precise positioning of the foot, wearing its shoe, in relation to the emission/reception means (40),
- means (50) for measuring the complex impedance of the emission/reception means (40) influenced by the load consisting of the shoe and its contents, representing the complex dielectric characteristics of the shoe and of its contents, and
- means (50) for supplying information associated with the measured complex impedance and therefore with the nature of the contents of said shoe of the individual to be checked.

2. A device according to claim 1, **characterised in** fact that the support base (100) includes a plate in the form of a step which includes, on its upper surface (102), the position marking means (400).

3. A device according to one of claims 1 or 2, **characterised in that** the height of the support base (100) is between 100 and 200 mm, and preferably of the order of 150 mm.

4. A device according to one of claims 1 to 3, **characterised in that** the width of the support base (100) is between 450 and 700 mm, and preferably of the order of 575 mm.

5. A device according to one of claims 1 to 4, **characterised in that** the depth of the support base (100) is between 500 and 900 mm, and very preferably of the order of 670 mm.

6. A device according to one of claims 1 to 5, **characterised in that** the position marking means (400) include an imprint design (410).

7. A device according to claim 6, **characterised in that** the imprint design (410) includes a frame, preferably rectangular.

8. A device according to claim 7, **characterised in that** the frame has a length of between 300 and 500 mm, preferably of the order of 400 mm, and a width between 110 and 250 mm, preferably of the order of 180 mm.

9. A device according to one of claims 6 to 8, **characterised in that** the position marking means (400) include a mechanical end-stop (450).

10. A device according to claim 9, **characterised in that** the mechanical end-stop (450) is designed to act as a stop for the heel of a shoe.

11. A device according to one of claims 1 to 10, **characterised in that** it includes means (300) for delivering visual or audible messages guiding the user during the successive stages of the detection process.

12. A device according to one of claims 1 to 11, **characterised in that** it includes random sorting means (740) for the random designation of individuals conducted toward one or more additional tests.

13. A device according to one of claims 1 to 12, **characterised in that** it includes means (800) for the sampling of vapours or particle traces, such as of drugs or explosives for example, and for the analysis of these vapours or traces.

14. A device according to claim 13, **characterised in that** the sampling means include intake nozzles (800) on the support base (100).

15. A device according to one of claims 1 to 14, **characterised in that** it includes two vertical panels (200) projecting from the support base (100), with the vertical panels (200) including intake nozzles (00) for the sampling of vapours or particle traces.

16. A device according to claim 15, **characterised in that** the height of the vertical panels (200) is between 300 and 900 mm.

17. A device according to one of the previous claims, **characterised in that** emission/reception means (40) partially or totally surround the heel of the shoe, or surround all of the sole of the shoe.

18. A device according to one of claims 1 to 17, **characterised in that** the analysis means (50) for supplying information include means for comparing the measured complex impedance with predetermined reference values for the same range of frequencies, and for generating an alarm when the measured complex impedance is different from the reference values.

19. A device according to one of claims 1 to 1, **characterised in that** the analysis means (50) for supplying information associated with the measured complex impedance include means (70) for indicating the nature thus detected of the contents of the shoe or at least the family of these contents.

20. A device according to one of claims 1 to 19, **characterised in that** the emission/reception means (40) of an electromagnetic field are designed to sweep the range of frequencies ranging from a few Hz to a few GHz.

21. A device according to one of claims 1 to 20, **characterised in that** the analysis means (50) for measuring the complex impedance are adaptated for measuring the latter over a multiplicity of sampled frequencies in the range covered by the emission/reception means.

22. A device according to one of claims 1 to 21, taken in combination with claim 18, **characterised in that** the means for comparing the measured complex impedance are adaptated for comparing the latter with reference values contained in a memory (60).

23. A device according to one of claims 1 to 22, **characterised in that** it includes a sensor (52) for detecting the positioning of the foot, wearing its shoe, of the individual to be checked.

24. A device according to one of claims 1 to 22, **characterised in that** it includes manually-operated means for initiating the switching-on of the emission/reception means (40) of an electromagnetic field.

25. A device according to one of claims 1 to 24, **characterised in that** the emission/reception means (40) of an electromagnetic field are of the inductive type.

26. A device according to one of claims 1 to 24, **characterised in that** the emission/reception means (40) of an electromagnetic field are of the capacitive type.

27. A device according to one of claims 1 to 24, **characterised in that** the emission/reception means (40) of an electromagnetic field are composed of transmission lines.

28. A device according to one of claims 1 to 24, **characterised in that** the emission/reception means (40) simultaneously employ an inductive transducer (42) and a capacitive transducer (45, 46), in particular for the detection of metal parts in the shoe.

29. A device according to claim 6, **characterised in that** the design includes an imprint.

30. A device according to one of claims 1 to 29, **characterised in that** it also includes ionising or radioactive radiation detection means (500), in order to supply information associated with the presence or the absence of a product emitting ionising or radioactive radiation in a zone of the individual between the sole of the shoe and the knee of the individual to be checked.

31. A device according to claim 30, **characterised in that** the ionising or radioactive radiation detection means (500) are placed underneath the support base (100) on the face opposite (105) to that which includes the position marking means (400).

32. A device according to one of claims 30 or 31, **characterised in that** the ionising or radioactive radiation detection means (500) include a tube (501) in which a gas is trapped whose composition is chosen so as to generate an ionising discharge during the detection of active radiation, with this ionising discharge being used to generate an electric pulse.

33. A device according to claim 29 in combination with one of claims 30 to 32, **characterised in that** the tube (501) is positioned directly below the imprint (400).

34. A device according to claim 29 in combination with one of claims 30 to 33, **characterised in that** the tube (501) is positioned in a plane of symmetry of the imprint (440).

35. A device according to claim 29 in combination with one of claims 30 to 34, **characterised in that** the tube (501) extends more or less over the whole length of the imprint (440).

36. A device according to one of claims 30 to 35, **characterised in that** the ionising or radioactive radiation detection means (500) include means for detecting (502) the electric pulse generated by the tube (501).

37. A device according to claims 29 and 36 in combination, **characterised in that** the means (502) for detecting the electric pulse are placed underneath the base (100), in a peripheral region of the imprint.

38. A device according to one of claims 30 to 37, **characterised in that** the ionising or radioactive radiation detection means (500) are fixed to the base.

## Patentansprüche

1. Erfassungsvorrichtung zum Erfassen von nicht-erlaubten flüssigen oder festen Substanzen in einem Bereich mit geschütztem Zugang, **dadurch gekennzeichnet, dass** die Erfassungsvorrichtung in Kombination aufweist:
- ein Stützunterteil (100), das eingerichtet ist, einen einzelnen, mit dessen Schuhwerk bekleideten Fuß von einer zu überprüfenden Person aufzunehmen,
- Mittel (40) zum Emittieren/Empfangen eines elektromagnetischen Feldes bei zumindest einer Vielzahl von Frequenzen, die in einem bestimmten Frequenzbereich umfasst sind,
- an dem Stützunterteil (100) vorgesehene Positionsmarkierungsmittel (400), die eingerichtet sind, eine präzise Position des mit dessen Schuhwerk bekleideten Fußes in Bezug auf die Mittel (40) zum Emittieren/Empfangen vorzugeben,
- Mittel (50) zum Messen der komplexen Impedanz der Mittel (40) zum Emittieren/Empfangen, wobei die komplexe Impedanz durch die Ladung beeinflusst wird, welche das Schuhwerk und dessen Inhalt aufweist, und welche für die komplexen dielektrischen Eigenschaften des Schuhwerks und dessen Inhalt steht, und
- Mittel (50) zum Liefern einer Information, die mit der gemessenen komplexen Impedanz und folglich mit der Beschaffenheit des Inhalts des Schuhwerks der zu überprüfenden Person verknüpft ist.

2. Vorrichtung gemäß Anspruch 1, **dadurch gekennzeichnet, dass** das Stützunterteil (100) eine Platte in Form einer Stufe umfasst, die an ihrer oberen Fläche (102) die Positionsmarkierungsmittel (400) aufweist.

3. Vorrichtung gemäß einem der Ansprüche 1 oder 2, **dadurch gekennzeichnet, dass** die Höhe des Stützunterteils (100) zwischen 100 und 200 mm, noch bevorzugter in der Größenordnung von 150 mm, liegt.

4. Vorrichtung gemäß einem der Ansprüche 1 bis 3, **dadurch gekennzeichnet, dass** die Breite des Stützunterteils (100) zwischen 450 und 700 mm, noch bevorzugter in der Größenordnung von 575 mm, liegt.

5. Vorrichtung gemäß einem der Ansprüche 1 bis 4, **dadurch gekennzeichnet, dass** die Tiefe des Stützunterteils (100) zwischen 500 und 900 mm, noch bevorzugter in der Größenordnung von 670 mm, liegt.

6. Vorrichtung gemäß einem der Ansprüche 1 bis 5, **dadurch gekennzeichnet, dass** die Positionsmarkierungsmittel (400) ein Abdruckmuster (410) aufweisen.

7. Vorrichtung gemäß Anspruch 6, **dadurch gekennzeichnet, dass** das Abdruckmuster (410) einen Rahmen, vorzugsweise einen rechteckförmigen Rahmen, umfasst.

8. Vorrichtung gemäß Anspruch 7, **dadurch gekennzeichnet, dass** der Rahmen eine Länge, die zwischen 300 und 500 mm, vorzugsweise in der Größenordnung von 400 mm, liegt und eine Breite, die zwischen 110 und 250 mm, vorzugsweise in der Größenordnung von 180 mm, liegt, hat.

9. Vorrichtung gemäß einem der Ansprüche 6 bis 8, **dadurch gekennzeichnet, dass** die Positionsmarkierungsmittel (400) einen mechanischen Anschlag (450) aufweisen.

10. Vorrichtung gemäß Anspruch 9, **dadurch gekennzeichnet, dass** der mechanische Anschlag (450) eingerichtet ist, als ein Anschlag für den Absatz eines Schuhwerks zu dienen.

11. Vorrichtung gemäß einem der Ansprüche 1 bis 10, **dadurch gekennzeichnet, dass** sie ein Mittel (300) zum Ausgeben von visuellen oder akustischen Nachrichten, die den Benutzer während den aufeinander folgenden Schritten der Erfassungsvorgangs leiten, aufweist.

12. Vorrichtung gemäß einem der Ansprüche 1 bis 11, **dadurch gekennzeichnet, dass** sie Mittel (740) zum zufälligen Auswählen in Bezug auf die zufällige Benennung von Personen, die durch ein oder mehrere ergänzende Versuche geführt werden, aufweist.

13. Vorrichtung gemäß einem der Ansprüche 1 bis 12, **dadurch gekennzeichnet, dass** sie Mittel (800) zur Entnahme von Dämpfen oder Spuren von Partikeln, beispielsweise von Betäubungsmitteln oder Sprengstoff, und zur Analyse dieser Dämpfe und Spuren aufweist.

14. Vorrichtung gemäß Anspruch 13, **dadurch gekennzeichnet, dass** die Mittel zur Entnahme Ansaugdüsen (800) an dem Stützunterteil (100) umfassen.

15. Vorrichtung gemäß einem der Ansprüche 1 bis 14, **dadurch gekennzeichnet, dass** sie zwei vertikale Platten (200), die von dem Stützunterteil (100) hervorstehen, aufweist, wobei die vertikalen Platten (200) Ansaugdüsen (800) für die Entnahme der Dämpfe und Spuren von Partikeln aufweisen.

16. Vorrichtung gemäß Anspruch 15, **dadurch gekennzeichnet, dass** die Höhe der vertikalen Platten (200) zwischen 300 und 900 mm liegt.

17. Vorrichtung gemäß einem der vorangehenden Ansprüche, **dadurch gekennzeichnet, dass** die Mittel (40) zum Emittieren/Empfangen teilweise oder gänzlich den Absatz des Schuhwerks umgeben oder die gesamte Sohle des Schuhwerks umgeben.

18. Vorrichtung gemäß einem der Ansprüche 1 bis 17, **dadurch gekennzeichnet, dass** die Mittel (50) zum Liefern einer Information Mittel umfassen, die eingerichtet sind, die gemessene komplexe Impedanz mit vorbestimmten Referenzwerten für den gleichen Frequenzbereich zu vergleichen und einen Alarm zu erzeugen, wenn die gemessene komplexe Impedanz sich von den Referenzwerten entfernt.

19. Vorrichtung gemäß einem der Ansprüche 1 bis 18, **dadurch gekennzeichnet, dass** die Mittel (50) zum Liefern einer Information, die mit der gemessenen komplexen Impedanz verknüpft ist, Mittel (70) umfasst, die eingerichtet sind, die so erfasste Beschaffenheit des Inhalts des Schuhwerks oder zumindest die Familie dieses Inhalts anzugeben.

20. Vorrichtung gemäß einem der Ansprüche 1 bis 19, **dadurch gekennzeichnet, dass** die Mittel (40) zum Emittieren/Empfangen eines elektromagnetischen Feldes angepasst sind, den Frequenzbereich, der von einigen Hz bis zu einigen GHz verläuft, abzutasten.

21. Vorrichtung gemäß einem der Ansprüche 1 bis 20, **dadurch gekennzeichnet, dass** die Mittel (50) zum Messen der komplexen Impedanz eingerichtet sind, letztere bei einer Vielzahl von ausgewählten Frequenzen in dem Bereich, der durch die Mittel zum Emittieren/Empfangen abgedeckt wird, zu messen.

22. Vorrichtung gemäß einem der Ansprüche 1 bis 21, in Kombination mit Anspruch 18, **dadurch gekennzeichnet, dass** die Mittel, die eingerichtet sind, die gemessene komplexe Impedanz zu vergleichen, eingerichtet sind, letztere mit Referenzwerten zu vergleichen, die in einem Speicher (60) enthalten sind.

23. Vorrichtung gemäß einem der Ansprüche 1 bis 22, **dadurch gekennzeichnet, dass** sie einen Sensor (52) aufweist, der eingerichtet ist, das Instellungbringen des mit dem Schuhwerk bekleideten Fußes der zu überprüfenden Person zu erfassen.

24. Vorrichtung gemäß einem der Ansprüche 1 bis 22, **dadurch gekennzeichnet, dass** sie Mittel zur manuellen Betätigung umfasst, die eingerichtet sind, die Inbetriebnahme der Mittel (40) zum Emittieren/Empfangen eines elektronmagnetischen Feldes zu initiieren.

25. Vorrichtung gemäß einem der Ansprüche 1 bis 24, **dadurch gekennzeichnet, dass** die Mittel (40) zum Emittieren/Empfangen eines elektrischen Feldes in der Induktivbauart ausgebildet sind.

26. Vorrichtung gemäß einem der Ansprüche 1 bis 24, **dadurch gekennzeichnet, dass** die Mittel (40) zum Emittieren/Empfangen eines elektromagnetischen Feldes in der Kapazitivbauart ausgebildet sind.

27. Vorrichtung gemäß einem der Ansprüche 1 bis 24, **dadurch gekennzeichnet, dass** die Mittel (40) zum Emittieren/Empfangen eines elektromagnetischen Feldes durch Übertragungsleitungen ausgebildet werden.

28. Vorrichtung gemäß einem der Ansprüche 1 bis 24, **dadurch gekennzeichnet, dass** die Mittel (40) zum Emittieren/Empfangen gleichzeitig einen induktiven Transduktor (42) und einen kapazitiven Transduktor (45, 46), insbesondere zur Erfassung von metallischen Teilen in dem Schuhwerk, einsetzen.

29. Vorrichtung gemäß Anspruch 6, **dadurch gekennzeichnet, dass** das Muster eine Abdruck umfasst.

30. Vorrichtung gemäß einem der Ansprüche 1 bis 29, **dadurch gekennzeichnet, dass** sie weiterhin Erfassungsmittel (500) zur Erfassung von ionisierender oder radioaktiver Strahlung umfasst, um eine Information zu liefern, die mit dem Vorliegen oder Nicht-Vorliegen eines Produkts verknüpft ist, das ionisierende oder radioaktive Strahlung in einem Bereich der Person, der zwischen der Sohle des Schuhwerks und dem Knie der zu überprüfenden Person liegt, emittiert.

31. Vorrichtung gemäß Anspruch 30, **dadurch gekennzeichnet, dass** die Erfassungsmittel zur Erfassung der ionisierenden oder radioaktiven Strahlung (500) unter dem Stützunterteil (100) an der gegenüberliegenden Fläche (105) zu derjenigen, die die Positionsmarkierungsmittel (400) umfasst, angeordnet sind.

32. Vorrichtung gemäß einem der Ansprüche 30 oder 31, **dadurch gekennzeichnet, dass** die Erfassungsmittel zur Erfassung von ionisierender oder radioaktiver Strahlung (500) eine Röhre (501) umfassen, in welcher ein Gas eingegrenzt ist, dessen Zusammensetzung derart ausgewählt ist, um eine ionisierende Entladung während der Erfassung von aktiver Strahlung zu erzeugen, wobei die ionisierende Entladung die Erzeugung eines elektrischen Impulses zulässt.

33. Vorrichtung gemäß Anspruch 29, in Kombination mit einem der Ansprüche 30 bis 32, **dadurch gekennzeichnet, dass** die Röhre (501) direkt unterhalb des Abdrucks (400) angeordnet ist.

34. Vorrichtung gemäß Anspruch 29 in Kombination mit einem der Ansprüche 30 bis 33, **dadurch gekennzeichnet, dass** die Röhre (501) in einer Symmetrieebene des Abdrucks (440) angeordnet ist.

35. Vorrichtung gemäß Anspruch 29 in Kombination mit einem der Ansprüche 30 bis 34, **dadurch gekennzeichnet, dass** sich die Röhre (501) in etwa über die ganze Länge des Abdrucks (440) erstreckt.

36. Vorrichtung gemäß einem der Ansprüche 30 bis 35, **dadurch gekennzeichnet, dass** die Erfassungsmittel zur Erfassung ionisierender oder radioaktiver Strahlung (500) Erfassungsmittel (502) zur Erfassung von elektrischen Impulsen, die durch die Röhre 501) erzeugt werden, umfassen.

37. Vorrichtung gemäß der Kombination aus den Ansprüchen 29 und 36, **dadurch gekennzeichnet, dass** die Erfassungsmittel (502) zur Erfassung des elektrischen Impulses unter dem Unterteil (100) in einem Peripheriebereich des Abdrucks angeordnet sind.

38. Vorrichtung gemäß einem der Ansprüche 30 bis 37, **dadurch gekennzeichnet, dass** die Erfassungsmittel zur Erfassung ionisierender oder radioaktiver Strahlung (500) an dem Unterteil fixiert sind.
